# EUROPEAN PATENT SPECIFICATION

(11) **EP 1 507 070 B1**
(45) Date of publication and mention of the grant of the patent: **21.11.2007**
(21) Application number: 04018718.9
(22) Date of filing: 06.08.2004
(51) Int. Cl.: F01M 9/04, F16N 15/00, F16N 15/02

(54) **Fuel lubricated sliding mechanism**
Kraftstoffgeschmierte Vorrichtung
Dispositif lubrifié par le combustible

(30) Priority: 11.08.2003 JP 2003207060; 11.08.2003 JP 2003207061; 11.08.2003 JP 2003207058; 11.08.2003 JP 2003207063; 11.08.2003 JP 2003207057
(43) Date of publication of application: 16.02.2005
(73) Proprietor: NISSAN MOTOR CO., LTD., Yokohama-shi, Kanagawa 221-0023 (JP)
(72) Inventor: Hamada, Takahiro, Yokohama-shi, Kanagawa 230-0051 (JP); Kano, Makoto, Yokohama-shi, Kanagawa 245-0002 (JP); Mabuchi, Yutaka, Yokohama-shi, Kanagawa 231-0834 (JP); Hosono, Kyoji, Fuchu-shi, Tokyo 183-0013 (JP); Ohba, Toshiyuki, Yokohama-shi, Kanagawa 236-0021 (JP)
(74) Representative: Hoefer, Theodor

(56) References cited:
- EP-A- 0 299 785
- DE-C- 643 034
- US-A- 2 716 972
- US-B2- 6 543 394

## Description

### BACKGROUND OF THE INVENTION

The invention relates to a fuel lubricated sliding mechanism, and more particularly to a sliding mechanism for e.g. an automotive fuel system component, such as a fuel injection valve or a high-pressure fuel pump, having sliding parts slidable relative to each other in the presence of fuel.

A fuel system includes a plurality of components, such as a fuel injection valve and a high-pressure fuel pump, having component parts slidable relative to each other in the presence of fuel. These sliding component parts are generally made of martensitic stainless steel, and susceptible to abnormal wear owing to fuel corrosion. In order to prevent such abnormal wear, Japanese Laid-Open Patent Publication No. 7-063135 proposes forming hard thin coating films of chromium nitride (CrN) or titanium nitride (TiN) on the respective sliding parts of a fuel injection valve.

Further, there has been an increasing expectation for biofuels due to the recent awareness of fossil-fuel exhaustion and environmental problems resulting from auto emission and CO₂ emission. The biofuels are derived from field clops (such as rape seeds, soybeans and sugarcane), agricultural waste (such as straw and chaff) and other biomass sources and known for its less health and environmental impact.

For gasoline engines, alcohol fuels prepared by blending gasoline with e.g. sugarcone- or cassava-derived ethanol are already in practical use. So-called "E3" (gasohol of 3% ethanol and 97% gasoline) and "E10" (gasohol of 10% ethanol and 90% gasoline) are proceeding toward the practical use in North America etc., and the practical use of "E85" and "E95" (gasohol with higher ethanol contents) is being examined.

For diesel engines, mixtures of fatty acid methyl esters (abbreviated as "FAME") derived from vegetable oils or waste edible oils are usable. The FAME mixture has a sulfur content lower than that of light oil, and is expected to be useful as environment-conscious fuel material. In addition, it has been proved that the FAME mixture allows as high mileage per unit quantity as the light oil.

The conversion of natural gas to liquid hydrocarbons is also proposed to obtain so-called "GTL (Gas-to-Liquid) products", as an alternative to fossil fuel, for diesel engines. The GTL product does not contain sulfur and aromatic compounds, and is expected to be as clean fuel material as LNG (liquid natural gas).

The invention concerns a fuel lubricated sliding mechanism. Such a mechanism is known from US 6,543,394 B2. This document describes a four-cycle, fuel lubricated, internal combustion engine system suited for a vehicle including a fuel tank containing fuel at a remote location from the engine, a first fluid path for transporting fuel to the lubrication system of the engine, and a second fluid path for transporting fuel to said combustion system of the engine. In this way, the engine's fuel serves as the lubricant and the combustive agent. Certain load bearing surfaces of the engine can include a hard material based on borides, carbides and nitrides, a superhard steel, a self-lubricating material, or a diamond-like coating. The fuel can be one of liquefied petroleum gas, bio-diesel, natural gas, biogas, methanol, Fischer-Tropsch fuel, ethanol, n-pentene, hexane, n-heptane, isooctane, or hydrogen. Also, additives such as molybdenum disulfide, graphite, soybean derived oil, canola oil, polytetrafloeraethylene (PTFE), zinc dialkyldithiophosphate, polyalphaolefin, dibasic organic esters, or mineral oil can be added to the fuel.

### SUMMARY OF THE INVENTION

The above-proposed coating technique is originally intended for the protection of the sliding parts of the fuel injection valve from abnormal wear in alcohol or gas fuel. When the proposed fuel injection valve is used to inject alcohol fuel or gas fuel, the CrN- or TiN-coated sliding parts may be protected from abnormal wear but do not show sufficient low-friction characteristics. When the proposed fuel injection valve is used to inject gasoline, light oil, biodiesel fuel or GTL fuel, the CrN- or TiN-coated sliding parts cannot always show low-friction characteristics and corrosion/wear resistance. It is thus desired that the sliding parts of the fuel system component be provided with not only high corrosion/wear resistance but also sufficient low-friction characteristics in the presence of gasoline, light oil, alcohol fuel, biodiesel fuel or GTL fuel.

It is an object underlying the present invention to provide a fuel lubricated sliding mechanism having sliding parts slidable relative to each other so as to show excellent low-friction characteristics and corrosion/wear resistance when exposed to gasoline, light oil, alcohol fuel, biodiesel fuel or GTL fuel and, when used in a fuel system component, allow the fuel system component to increase in durability, reliability and capabilities.

The solution of this object is achieved by the combination of features of claim 1. The dependent claims contain advantageous embodiments of the present invention.

The other objects and features of the invention will also become understood from the following description.

### BRIEF DESCRIPTION OF THE DRAWINGS

FIG 1A is a sectional view of a fuel injection valve according to an exemplary embodiment of the present invention.

FIG. 1B is an enlarged view of the encircled portion of FIG. 1A.

FIG. 2 is a perspective view of a SRV test unit.

### DESCRIPTION OF THE EMBODIMENTS

The present invention will be described below in detail. In the following description, all percentages (%) are by mass unless otherwise specified.

A sliding mechanism according to one embodiment of the present invention (hereinafter just referred to as a "sliding mechanism") comprises a pair of sliding parts having sliding portions slidable relative to each other in the presence of fuel. Although the sliding mechanism can be applied to various fuel system components, such as a fuel injection valve (also called "needle valve") having as sliding parts a needle, a needle guide, a nozzle and a housing and a high-pressure fuel pump having as sliding parts a cam ring, a plunger, a suction valve and a housing, the following exemplary embodiment specifically refers to needle valve 1.

### [Sliding Parts]

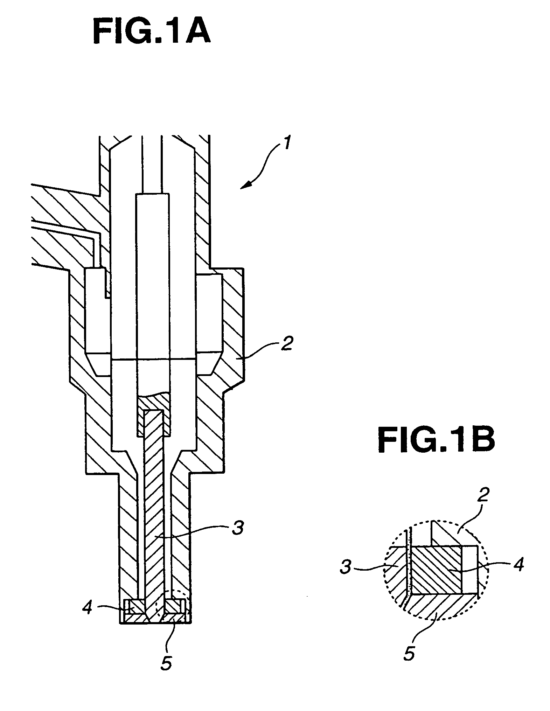

As shown in FIG. 1A and 1B, needle valve 1 has valve housing 2, needle 3 inserted in the center of valve housing 2 so as to make a reciprocating motion, needle guide 4 disposed at the tip end side of valve housing 2 to guide the reciprocating motion of needle 3, and nozzle 5 disposed at the tip end of the valve housing 2 to receive therein needle 3. Needle 3 makes sliding contact with needle guide 4 during the fuel injection control, and is pressed against the orifice of nozzle 5 during the stop of fuel injection.

In the present embodiment, the outer cylindrical portion (as a sliding portion) of needle 3 is covered with a hard carbon coating. It is alternatively possible to apply hard carbon coatings to the inner cylindrical portion (as a sliding portion) of needle guide 4 and the orifice portion (as a sliding portion) of nozzle 5 instead of applying a hard carbon coating to the outer cylindrical portion of needle 3, or possible to apply hard carbon coatings to the outer cylindrical portion of needle 3, the inner circumferential portion of needle guide 4 and the orifice portion of nozzle 5. To sum up, a thin coating of hard carbon is formed to cover at least one of any two opposed sliding portions of needle 3, needle guide 4 and nozzle 5.

The hard carbon coating is made of an amorphous carbon material, such as a diamond-like carbon (DLC) material. Specific examples of the DLC material includes hydrogen-free amorphous carbon (a-C), hydrogen-containing amorphous carbon (a-C:H) and/or metal carbide or metal carbon (MeC) that contains as a part a metal element of titanium (Ti) or molybdenum (Mo).

The coefficient of friction between two opposed sliding portions increases with the hydrogen content of the hard carbon coating. The hydrogen content of the hard carbon coating is thus preferably controlled to 30 atomic% or less, more preferably 20 atomic% or less, still more preferably 10 atomic% or less, yet more preferably 5 atomic% or less, and most preferably 0.5 atomic% or less, in order for the hard carbon coating to attain a lower friction coefficient and stable sliding characteristics in the presence of fuel.

Such a hard carbon coating low in hydrogen content can be formed by a physical vapor deposition (PVD) process, or a plasma chemical vapor deposition (CVD) process. To lower the hydrogen content of the hard carbon coating effectively, the hard carbon coating is desirably formed by the physical vapor deposition process, such as sputtering or arc ion plating, in which the coating atmosphere contains substantially no hydrogen and hydrogen-containing compounds. Before the formation of the hard carbon coatings, it may be desirable to bake a reaction vessel and base supporting fixtures and to clean the uncoated sliding portions (base portions) of needle 3, needle guide 4 and nozzle 5.

The sliding portions (base portions) of needle 3, needle guide 4 and nozzle 5are formed of any metallic material, such as a steel material or an aluminum alloy material. Depending on the usage of the sliding mechanism, the sliding portions may be formed of a resinous material.

### [Fuel]

The fuel is selected from the group consisting of gasoline, light oil, alcohol fuel, biodiesel fuel and GTL fuel.

### Gasoline

The gasoline preferably contains therein an ether lubricity improver.

As the ether lubricity improver, there can be used oxygen-containing organic compounds having one or more ether bonds in the molecule as indicated by the following expression: R¹-(O-R²)ₙ, where R¹ and R² represent hydrocarbon groups, such as alkyl groups, alkenyl groups, cycloalkyl groups, alkylcycloalkyl groups, aryl groups, alkylaryl groups or arylalkyl groups, that may have one or more bonds (groups) selected from hydroxyl, carboxyl, carbonyl, ester and ether, and that may contain an element or elements other than carbon, hydrogen and oxygen, such as halogens (e.g. fluorine and chlorine), nitrogen, sulfur, phosphorous, boron and metals; and n is an integer of 1 to 40, preferably 1 to 6, more preferably 1 to 4.

The carbon number of each hydrocarbon group R¹, R² is not particularly restricted, and is preferably 1 to 40, more preferably 2 to 30, still more preferably 3 to 20.

Examples of the alkyl groups suitable for the ether lubricity improver of the gasoline are C₁-C₄₀ straight- or branched-chain alkyl groups (including all possible isomeric groups), such as methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, icosyl, heneicosyl, docosyl, tricosyl and tetracosyl. Of these alkyl groups, preferred are C₂-C₃₀ alkyl groups, and more preferred are C₃-C₂₀ alkyl groups.

Examples of the alkenyl groups suitable for the ether lubricity improver of the gasoline are C₂-C₄₀ straight- or branched-chain alkenyl groups (including all possible isomeric groups), such as vinyl, propenyl, butenyl, pentenyl, hexenyl, heptenyl, octenyl, nonenyl, decenyl, undecenyl, dodecenyl, tridecenyl, tetradecenyl, pentadecenyl, hexadecenyl, heptadecenyl, octadecenyl, nonadecenyl, icosenyl, heneicosenyl, docosenyl, tricosenyl and tetracosenyl. Of these alkenyl groups, preferred are C₂-C₃₀ alkenyl groups, and more preferred are C₃-C₂₀ alkenyl groups.

Examples of the cycloalkyl groups suitable for the ether lubricity improver of the gasoline are C₃-C₄₀ cycloalkyl groups, such as cyclopentyl, cyclohexyl, cycloheptyl and cyclooctyl. Of these cycloalkyl groups, preferred are C₃-C₂₀ cycloalkyl groups, and more preferred are C₅-C₈ cycloalkyl groups.

Examples of the alkylcycloalkyl groups suitable for the ether lubricity improver of the gasoline are C₄-C₄₀ alkylcycloalkyl groups (including all possible isomeric groups), such as methylcyclopentyl, dimethylcyclopentyl, ethylmethylcyclopentyl, diethylcyclopentyl, methylcyclohexyl, dimethylcyclohexyl, ethylmethylcyclohexyl, diethylcyclohexyl, methylcycloheptyl, dimethylcycloheptyl, ethylmethylcycloheptyl and diethylcycloheptyl. Of these alkylcycloalkyl groups, preferred are C₅-C₂₀ alkylcycloalkyl groups, and more preferred are C₆-C₁₂ alkylcycloalkyl groups.

Examples of the aryl groups suitable for the ether lubricity improver of the gasoline are C₆-C₂₀ aryl groups, preferably C₆-C₁₀, such as phenyl and naphthyl.

Examples of the alkylaryl groups suitable for the ether lubricity improver of the gasoline are C₇-C₄₀ alkylaryl groups (including all possible isomeric groups), such as monosubstituted aryl groups, e.g., tolyl, ethylphenyl, propylphenyl, butylphenyl, pentylphenyl, hexylphenyl, heptylphenyl, octylphenyl, nonylphenyl, decylphenyl, undecylphenyl and dodecylphenyl, and polysubstituted aryl groups (i.e. aryl groups having two or more same or different substituents selected from alkyl, aryl, alkylaryl and arylalkyl groups), e.g., xylyl, diethylphenyl, dipropylphenyl, 2-methyl-6-tert-butylphenyl, 2,6-di-tert-butyl-4-methylphenyl and 2,6-di-tert-butyl-4-(3,5-di-tert-butyl-4-benzyl)phenyl. Of these alkylaryl groups, preferred are C₇-C₂₀ alkylaryl groups, and more preferred are C₇-C₁₂ alkylaryl groups.

Examples of the arylalkyl groups suitable for the ether lubricity improver of the gasoline are C₇-C₄₀ arylalkyl groups (including all possible isomeric groups), such as benzyl, phenylethyl, phenylpropyl, phenylbutyl, phenylpentyl and phenylhexyl. Of these arylalkyl groups, preferred are C₇-C₂₀ arylalkyl groups, and more preferred are C₇-C₁₂ arylalkyl groups.

More specifically, the ether lubricity improver of the gasoline can be selected from saturated or unsaturated aliphatic ethers, aromatic ethers, cyclic ethers and mixtures thereof.

Specific examples of the saturated or unsaturated aliphatic ethers usable as the ether lubricity improver of the gasoline are C₁-C₄₀ saturated or unsaturated aliphatic monoethers (including all possible isomers), such as dimethyl ether, diethyl ether, di-n-propyl ether, diisopropyl ether, di-n-butyl ether, diisobutyl ether, di-n-amyl ether, diisoamyl ether, dihexyl ether, diheptyl ether, dioctyl ether, dinonyl ether, didecyl ether, diundecyl ether, didodecyl ether, ditridecyl ether, ditetradecyl ether, dipentadecyl ether, dihexadecyl ether, diheptadecyl ether, dioctadecyl ether, dinonadecyl ether, dieicosyl ether, methyl ethyl ether, methyl n-propyl ether, methyl isopropyl ether, methyl n-butyl ether, methyl isobutyl ether, methyl tert-butyl ether, methyl n-amyl ether, methyl isoamyl ether, ethyl n-propyl ether, ethyl isopropyl ether, ethyl n-butyl ether, ethyl isobutyl ether, ethyl tert-butyl ether, ethyl n-amyl ether, ethyl isoamyl ether, divinyl ether, diallyl ether, methyl vinyl ether, methyl allyl ether, ethyl vinyl ether and ethyl allyl ether.

Specific examples of the aromatic ethers usable as the ether lubricity improver of the gasoline are anisole, phenetole, phenyl ether, benzyl ether, benzylphenyl ether, α-naphtyl ether, β-naphtyl ether, polyphenyl ether and perfluoroether. These aromatic ether compounds may each have one or more saturated or unsaturated straight or branched aliphatic substituent groups at any positions, and are preferably in liquid form under normal usage conditions, in particular, at ambient temperatures.

Specific examples of the cyclic ether compounds usable as the ether lubricity improver of the gasoline are C₂-C₄₀ cyclic ethers, such as ethyleneoxide, propyleneoxide, trimethyleneoxide, tetrahydrofuran, tetrahydropyran, dioxane and glycidyl ether. These cyclic ether compounds may each have one or more substituents selected from saturated or unsaturated aliphatic groups, carbocyclic groups and saturated or unsaturated aliphatic carbocyclic groups at any positions.

Among the above ether compounds, it is desirable to use either or both of methyl tert-butyl ether (MTBE) and ethyl tert-butyl ether as the lubricity improver so as to attain good startability and higher octane number. In order to address environmental problems, such as the buildup of NOₓ, the amount of methyl tert-butyl ether (MTBE) and/or ethyl tert-butyl ether added is generally 7% or less based on the total mass of the gasoline.

### Light Oil

The light oil preferably has a sulfur content of 500 ppm or less, more preferably 50 ppm or less, in order to reduce the amount of particulate matter (PM) in exhaust gas.

Further, the light oil preferably contains at least one of a fatty-ester lubricity improver and an aliphatic-amine lubricity improver.

As the fatty-ester and aliphatic-amine lubricity improvers, there may be used fatty acid esters and aliphatic amines having C₆-C₃₀ straight or branched hydrocarbon chains, preferably C₈-C₂₄ straight or branched hydrocarbon chains, more preferably C₁₀-C₂₀ straight or branched hydrocarbon chains. When the carbon number of the hydrocarbon chain of the fatty-ester or aliphatic-amine lubricity improver is not within the range of 6 to 30, there arises a possibility of failing to obtain a desired friction reducing effect.

Examples of the C₆-C₃₀ straight or branched hydrocarbon chain suitable for the fatty-ester or aliphatic-amine lubricity improver of the light oil are: alkyl groups, such as hexyl, heptyl, octyl, nonyl, decyl, undecyl, dodecyl, tridecyl, tetradecyl, pentadecyl, hexadecyl, heptadecyl, octadecyl, nonadecyl, icosyl, heneicosyl, docosyl, tricosyl, tetracosyl, pentacosyl, hexacosyl, heptacosyl, octacosyl, nonacosyl and triacontyl; and alkenyl groups, such as hexenyl, heptenyl, octenyl, nonenyl, decenyl, undecenyl, dodecenyl, tridecenyl, tetradecenyl, pentadecenyl, hexadecenyl, heptadecenyl, octadecenyl, nonadecenyl, icosenyl, heneicosenyl, docosenyl, tricosenyl, tetracosenyl, pentacosenyl, hexacosenyl, heptacosenyl, octacosenyl, nonacosenyl and triacontenyl. These alkyl and alkenyl groups include all possible isomeric groups.

The fatty-ester lubricity improver of the light oil can be selected from esters of fatty acids having the above C₆-C₃₀ hydrocarbon groups and monohydric or polyhydric aliphatic alcohols. Specific examples of the fatty acid ester compounds usable as the lubricity improver of the light oil include glycerol monooleate, glycerol dioleate, sorbitan monooleate and sorbitan dioleate.

The aliphatic-amine lubricity improver of the light oil can be selected from aliphatic monoamines and alkylene oxide adducts thereof, aliphatic polyamines, imidazolines and derivatives thereof, each having the above C₆-C₃₀ hydrocarbon groups. Specific examples of the aliphatic amine compounds usable as the lubricity improver of the light oil include: aliphatic amine compounds, such as laurylamine, lauryldiethylamine, lauryldiethanolamine, dodecyldipropanolamine, palmitylamine, stearylamine, stearyltetraethylenepentamine, oleylamine, oleylpropylenediamine, oleyldiethanolamine and N-hydroxyethyloleylimidazolyne; alkylene oxide adducts of the above aliphatic amine compounds, such as N,N-dipolyoxyalkylene-N-alkyl or alkenyl (C₆-C₂₈) amines; and acid-modified compounds prepared by reacting the above aliphatic amine compounds with C₂-C₃₀ monocarboxylic acids (such as fatty acids) or C₂-C₃₀ polycarboxylic acids (such as oxalic acid, phthalic acid, trimellitic acid and pyromellitic acid) so as to neutralize or amidate the whole or part of the remaining amino and/or imino groups. Of these aliphatic amine compounds, preferred is N,N-dipolyoxyethylene-N-oleylamine.

The amount of the fatty-ester lubricity improver and/or the aliphatic-amine lubricity improver added is not particularly restricted, and is preferably 0.05 to 3.0%, more preferably 0.1 to 2.0%, still more preferably 0.5 to 1.4%, based on the total mass of the light oil. When the amount of the fatty-ester lubricity improver and/or the aliphatic-amine lubricity improver in the light oil is less than 0.05%, there is a possibility of failing to obtain a sufficient friction reducing effect. When the amount of the fatty-ester lubricity improver and/or the aliphatic-amine lubricity improver in the light oil exceeds 3.0%, there is a possibility that the solubility of the lubricity improver or improvers in the light oil becomes so low that the light oil deteriorates in storage stability to cause precipitations.

The addition of such a fatty-ester lubricity improver and/or aliphatic-amine lubricity improver into the light oil would address a future requirement to decrease the sulfur content of light oil.

### Alcohol Fuel

The alcohol fuel is a blend of gasoline and alcohol (also called "gasohol").

As the alcohol blended with gasoline, there may be used monohydric alcohols, polyhydric alcohols (dihydric alcohols, tri- or higher hydric alcohols), alkylene oxide adducts thereof, and mixtures thereof.

The monohydric alcohols are those having one hydroxyl group in each molecule. Specific examples of the monohydric alcohols suitable for the alcohol fuel are: C₁-C₄₀ monohydric alkyl alcohols (including all possible isomers), such as methanol, ethanol, propanols (1-propanol, 2-propanol), butanols (1-butanol, 2-butanol, 2-methyl-1-propanol, 2-methyl-2-propanol), pentanols (1-pentanol, 2-pentanol, 3-pentanol, 2-methyl-1-butanol, 3-methyl-1-butanol, 3-methyl-2-butanol, 2-methyl-2-butanol, 2,2-dimethyl-1-propanol), hexanols (1-hexanol, 2-hexanol, 3-hexanol, 2-methyl-1-pentanol, 2-methyl-2-pentanol, 2-methyl-3-pentanol, 3-methyl-1-pentanol, 3-methyl-2-pentanol, 3-methyl-3-pentanol, 4-methyl-1-pentanol, 4-methyl-2-pentanol, 2,3-dimethyl-1-butanol, 2,3-dimethyl-2-butanol, 3,3-dimethyl-1-butanol, 3,3-dimethyl-2-butanol, 2-ethyl-1-butanol, 2,2-dimethylbutanol), heptanols (1-heptanol, 2-heptanol, 3-heptanol, 2-methyl-1-hexanol, 2-methyl-2-hexanol, 2-methyl-3-hexanol, 5-methyl-2-hexanol, 3-ethyl-3-pentanol, 2,2-dimethyl-3-pentanol, 2,3-dimethyl-3-pentanol, 2,4-dimethyl-3-pentanol, 4,4-dimethyl-2-pentanol, 3-methyl-1-hexanol, 4-methyl-1-hexanol, 5-methyl-1-hexanol, 2-ethylpentanol), octanols (1-octanol, 2-octanol, 3-octanol, 4-methyl-3-heptanol, 6-methyl-2-heptanol, 2-ethyl-1-hexanol, 2-propyl-1-pentanol, 2,4,4-trimethyl-1-pentanol, 3,5-dimethyl-1-hexanol, 2-methyl-1-heptanol, 2,2-dimethyl-1'-hexanol), nonanols (1-nonanol, 2-nonanol, 3,5,5-trimethyl-1-hexanol, 2,6-dimethyl-4-heptanol, 3-ethyl-2,2-dimethyl-3-pentanol, 5-methyloctanol etc.), decanols (1-decanol, 2-decanol, 4-decanol, 3,7-dimethyl-1-octanol, 2,4,6-trimethylheptanol, etc.), undecanols, dodecanols, tridecanols, tetradecanols, pentadecanols, hexadecanols, heptadecanols, octadecanols (stearyl alcohol, etc.), nonadecanols, eicosanols, and tetracosanols; C₂-C₄₀ monohydric alkenyl alcohols (including all possible isomers), such as ethenol, propenol, butenols, hexenols, octenols, decenols, dodecenols and octadecenols (oleyl alcohol, etc.); C₃-C₄₀ monohydric (alkyl)cycloalkyl alcohols (including all possible isomers), such as cyclopentanol, cyclohexanol, cycloheptanol, cyclooctanol, methylcyclopentanols, methylcyclohexanols, dimethylcyclohexanols, ethylcyclohexanols, propylcyclohexanols, butylcyclohexanols, cyclopentylmethanols, cyclohexylmethanols, cyclohexylethanol (1-cyclohexylethanol, 2-cyclohexylethanol, etc.), cyclohexylpropanols (3-cyclohexylpropanol, etc.), cyclohexylbutanols (4-cyclohexylbuthanol, etc.) and butylcyclohexanol, 3,3,5,5-tetramethylcyclohexanol; (alkyl)aryl alcohols (including all possible isomers), such as phenyl alcohol, methyl phenyl alcohols (o-cresol, m-cresol, p-cresol), creosols, ethyl phenyl alcohols, propyl phenyl alcohols, butyl phenyl alcohols, butyl methyl phenyl alcohols (3-methyl-6-tert-butylphenyl alcohol, etc.), dimethyl phenyl alcohols, diethyl phenyl alcohols, dibutyl phenyl alcohols (2,6-di-tert-butylphenyl alcohol, 2,4-di-tert-butylphenyl alcohol, etc.), dibutyl methyl phenyl alcohols (2,6-di-tert-butyl-4-metylphenyl alcohol, etc.), dibutyl ethyl phenyl alcohols (2,6-di-tert-butyl-4-ethylphenyl alcohol etc.), tributylphenyl alcohols (2,4,6-tri-tert-butylphenyl alcohol, etc.), naphthols (α-naphthol, β-naphthol), dibutyl naphthols (2,4-di-tert-butyl-α-naphthol, etc.); and triazines, such as 6-(4-oxy-3,5-di-tert-butyl-anilino)-2,4-bis-(n-octyl-thio)-1,3,5-triazine.

Of these monohydric alcohol compounds, preferred are low-volatile C₁₂-C₁₈ straight- or branched-chain alkyl or alkenyl alcohols, such as oleyl alcohol and stearyl alcohol, so as to obtain a greater friction reducing effect on the sliding friction between the hard-carbon coated sliding part and the opposite sliding part under high-temperature conditions.

The dihydric alcohols are those having two hydroxyl groups in each molecule. Specific examples of the dihydric alcohols suitable for the alcohol fuel are: C₂-C₄₀ alkyl or alkenyl diols (including all possible isomers), such as ethylene glycol, diethylene glycol, polyethylene glycols, propylene glycol, dipropylene glycol, polypropylene glycols, neopentyl grycol, 1,3-propanediol, 1,4-butanediol, 1,2-butanediol, 2-methyl-1,3-propanediol, 1,5-pentanediol, 1,6-hexanediol, 2-ethyl-2-methyl-1,3-propanediol, 2-methyl-2,4-pentanediol, 1,7-heptanediol, 2-methyl-2-propyl-1,3-propanediol, 2,2-diethyl-1,3-propanediol, 1,8-octanediol, 1,9-nonanediol, 2-butyl-2-ethyl-1,3-propanediol, 1,10-decanediol, 1,11-undecanediol, 1,12-dodecanediol, 1,13-tridecanediol, 1,14-tetradecanediol, 1,15-heptadecanediol, 1,16-hexadecanediol, 1,17-heptadecanediol, 1,18-octadecanediol, 1,19-nonadecanediol and 1,20-icosadecanediol; C₂-C₄₀ (alkyl)cycloalkanediols (including all possible isomers), such as cyclohexanediols and methylcyclohexanediols; C₂-C₄₀ dihydric (alkyl)arylalcohols (including all possible isomers), such as benzenediols (catechol, etc.), methylbenzenediols, ethylbenzenediols, butylbenzendiols (p-tert-butylcatechol, etc.), dibutylbenzenediols (4,6-di-tert-butylresorcin, etc.), 4,4'-thiobis(3-methyl-6-tert-butylphenol), 4,4'-butylidenebis(3-methyl-6-tert-butylphenol), 2,2'-methylenebis(4-methyl-6-tert-butylphenol), 2,2'-thiobis(4,6-di-tert-butylresorcine), 2,2'-methylenebis(4-ethyl-6-tert-butylphenol), 4,4'-methylenebis(2,6-di-tert-butylphenol), 2,2'-(3,5-di-tert-butyl-4-hydroxy)propane and 4,4'-cyclohexylidenebis(2,6-di-tert-butylphenol); condensation products of p-tert-butylphenol and formaldehyde and condensation products of p-tert-butylphenol and acetoaldehyde.

Of these dyhydric alcohol compounds, preferred are ethylene glycol, propylene glycol, neopentyl glycol, 1,4-butanediol, 1,5-pentanediol, 1,6-hexanediol, 2-methyl-2,4-pentanediol, 2-ethyl-2-methyl-1,3-propanediol, 1,7-heptanediol, 1,8-octanediol, 1,9-nonanediol, 1,10-decanediol, 1,11-undecanediol and 1,12-dodecanediol to obtain a greater friction reducing effect on the sliding friction between the hard-carbon coated sliding part and the opposite sliding part. Hindered alcohols having a high molecular weight of 300 or larger, preferably 400 or larger, such as 2,6-di-tert-butyl-4-(3,5-di-tert-butyl-4-hydroxylbenzyl)phenyl alcohol, are especially preferred to secure high oxidation resistance while obtaining a good friction reducing effect, because the high-molecular-weight hindered alcohols have high heat resistance and low volatility under high-temperature conditions (e.g. under sliding conditions of an internal combustion engine).

The tri- or higher hydric alcohols are those having three or more hydroxyl groups in each molecule. In general, trihydric to decahydric alcohols, preferably trihydric to hexahydric alcohols, are used. Specific examples of the tri- or higher hydric alcohols suitable for the alcohol fuel are glycerol; trimethylolalkanes such as trimethylolethane, trimethylolpropane and trimethylolbutane; erythritol; pentaerythritol; 1,2,4-butanetriol; 1,3,5-pentanetriol; 1,2,6-hexanetriol; 1,2,3,4-butanetetrol; sorbitol; adonitol; arabitol; xylitol; mannitol; and polymerization and condensation products thereof, such as a dimer, a trimer a tetramer, a pentamer, a hexamer, a heptamer and an octamer of grycerin (diglycerol, triglycerol, tetraglycerol, etc.), a dimer, a trimer a tetramer, a pentamer, a hexamer, a heptamer and an octamer of trimethylolpropane (ditrymethylolpropane, etc.), a dimer, a trimer a tetramer, a pentamer, a hexamer, a heptamer and an octamer of pentaerythritol (dipentaerythritol, etc.), solbitan and sorbitol/glycerin condensates (including intramolecular condensates, intermolecular condensates or self-condensates).

Alternatively, there may be used sugar alcohols, such as xylose, arabitol, ribose, rhamnose, glucose, fructose, galactose, mannose, sorbose, cellobiose, mantose, isomaltose, trehalose and saccharose.

Of these tri- or higher hydric alcohol compounds, preferred are trihydric to hexahydric alcohols, such as glycerin, trimethylolalkanes (trimethylolethane, trimethylolpropane, trimethylolbutane etc.), pentaerythritol, 1,2,4-butanetriol, 1,3,5-pentanetriol, 1,2,6-hexanetriol, 1,2,3,4-butanetetrol, sorbitol, sorbitan, sorbitol/glycerin condensates, adonitol, arabitol, xylitol, mannitol and mixtures thereof. Any of glycerin, trimethylolethane, trimethylolpropane, pentaerythritol, solbitan and mixtures thereof, especially trihydric to hexahydric hydric alcohols having an oxygen content of 20% or higher, desirably 30% or higher, more desirably 40% or higher, are more preferred. It should be noted that hepta- or higher hydric alcohols tend to become too high in viscosity.

Specific examples of the alkylene oxide adducts of the above mono- or polyhydric alcohols suitable for the alcohol fuel are those prepared by adding C₂-C₆ alkylene oxides, preferably C₂-C₄ alkylene oxides, or polymers (or copolymers) thereof to the alcohols to thereby hydrocarbyletherify or hydrocarbylesterify the hydroxyl groups of the alcohols. As the C₂-C₆ alkylene oxides, there may be used ethylene oxide, propylene oxide, 1,2-epoxybutane (α-butylene oxide), 2,3-epoxybutane (β-butylene oxide), 1,2-epoxy-1-methylpropane, 1,2-epoxyheptane, 1,2-epoxyhexane. Of these alkylene oxides, preferred are ethylene oxide, propylene oxide and/or butylene oxide, especially ethylene oxide and/or propylene oxide, so as to obtain a greater friction reducing effect.

In the case of adding two or more different types of alkylene oxides, the polymerization process of oxyalkylene groups is not specifically restricted, and the oxyalkylene groups may be random-copolymerized or block-copolymerized. When the alkylene oxide is added to any polyalcohol having 2 to 6 hydroxyl groups, the alkylene oxide may be added to a part or all of the hydroxyl groups of the polyalcohol.

Among the above alcohol compounds, it is desirable to use methanol, ethanol, n-propanol, isopropanol, n-butanol, isobutanol of a mixture thereof in view of the cost performance and availability. Especially, ethanol derived from biomass sources is preferred for reduction of CO₂ emission.

### Biodiesel Fuel

The biodiesel fuel contains therein a few % to 100% of a FAME mixure. In other word, the biodiesel fuel is a pure FAME mixture or a blend of light oil and FAME mixture. Herein, the term "FAME mixture" refers to a mixture of fatty acid methyl esters derived from vegetable oil, such as rape-seed oil, soybean oil and corn oil, and/or waste edible oils, such as frying oil, and can be synthetically prepared by subjecting the vegetable and waste edible oils to hydrolytic degradation to yield fatty acids and glycerol, and then, condensing the thus-obtained fatty acids with methanol. As the vegetable and waste edible oils are predominantly composed of fatty acid glycerin esters, the FAME mixture contains various fatty acid fractions derived from the respective fatty acids of these raw oils.

### GTL Fuel

The GTL fuel contains a few % to 100% of a GTL (Gas-to-Liquid) product. In other word, the GTL fuel is a pure GTL product, or a blend of light oil and GTL product. Herein, the term "GTL product" refers to a liquid (hydrocarbon) product obtained by the conversion of natural gas and be free of sulfur and aromatic compounds.

The GTL fuel may preferably contain at least one of a fatty-ester lubricity improver and an aliphatic-amine lubricity improver.

As the fatty-ester and aliphatic-amine lubricity improvers, there may be used fatty acid esters and aliphatic amines having C₆-C₃₀ straight or branched hydrocarbon chains, preferably C₈-C₂₄ straight or branched hydrocarbon chains, more preferably C₁₀-C₂₀ straight or branched hydrocarbon chains. When the carbon number of the hydrocarbon chain of the fatty-ester or aliphatic-amine lubricity improver is not within the range of 6 to 30, there arises a possibility of failing to obtain a desired friction reducing effect.

Examples of the C₆-C₃₀ straight or branched hydrocarbon chain suitable for the fatty-ester or aliphatic-amine lubricity improver of the GTL fuel are: alkyl groups, such as hexyl, heptyl, octyl, nonyl, decyl, undecyl, dodecyl, tridecyl, tetradecyl, pentadecyl, hexadecyl, heptadecyl, octadecyl, nonadecyl, icosyl, heneicosyl, docosyl, tricosyl, tetracosyl, pentacosyl, hexacosyl, heptacosyl, octacosyl, nonacosyl and triacontyl; and alkenyl groups, such as hexenyl, heptenyl, octenyl, nonenyl, decenyl, undecenyl, dodecenyl, tridecenyl, tetradecenyl, pentadecenyl, hexadecenyl, heptadecenyl, octadecenyl, nonadecenyl, icosenyl, heneicosenyl, docosenyl, tricosenyl, tetracosenyl, pentacosenyl, hexacosenyl, heptacosenyl, octacosenyl, nonacosenyl and triacontenyl. These alkyl and alkenyl groups include all possible isomeric groups.

The fatty-ester lubricity improver of the GTL fuel can be selected from esters of fatty acids having the above C₆-C₃₀ hydrocarbon groups and monohydric or polyhydric aliphatic alcohols. Specific examples of the fatty acid ester compounds usable as the lubricity improver of the GTL fuel include glycerol monooleate, glycerol dioleate, sorbitan monooleate and sorbitan dioleate.

The aliphatic-amine lubricity improver of the GTL fuel can be selected from aliphatic monoamines and alkylene oxide adducts thereof, aliphatic polyamines, imidazolines and derivatives thereof each having the above C₆-C₃₀ hydrocarbon groups. Specific examples of the aliphatic amine compounds usable as the lubricity improver of the GTL fuel include: aliphatic amine compounds, such as laurylamine, lauryldiethylamine, lauryldiethanolamine, dodecyldipropanolamine, palmitylamine, stearylamine, stearyltetraethylenepentamine, oleylamine, oleylpropylenediamine, oleyldiethanolamine and N-hydroxyethyloleylimidazolyne; alkylene oxide adducts of the above aliphatic amine compounds, such as N,N-dipolyoxyalkylene-N-alkyl or alkenyl (C₆-C₂₈) amines; and acid-modified compounds prepared by reacting the above aliphatic amine compounds with C₂-C₃₀ monocarboxylic acids (such as fatty acids) or C₂-C₃₀ polycarboxylic acids (such as oxalic acid, phthalic acid, trimellitic acid and pyromellitic acid) so as to neutralize or amidate the whole or part of the remaining amino and/or imino groups. Of these aliphatic amine compounds, preferred is N,N-dipolyoxyethylene-N-oleylamine.

The amount of the fatty-ester lubricity improver and/or the aliphatic-amine lubricity improver added is not particularly restricted, and is preferably 0.05 to 3.0%, more preferably 0.1 to 2.0%, still more preferably 0.5 to 1.4%, based on the total mass of the GTL fuel. When the amount of the fatty-ester lubricity improver and/or the aliphatic-amine lubricity improver in the GTL fuel is less than 0.05%, there is a possibility of failing to obtain a sufficient friction reducing effect. When the amount of the fatty-ester lubricity improver and/or the aliphatic-amine lubricity improver in the GTL fuel exceeds 3.0%, there is a possibility that the solubility of the lubricity improver or improvers in the GTL fuel becomes so low that the GTL fuel deteriorates in storage stability to cause precipitations.

### [Experiments]

The present invention will be described in more detail by reference to the following examples. However, it should be noted that the following examples are only illustrative and not intended to limit the invention thereto.

### (1) Evaluation of Friction Coefficients and Wear Resistance

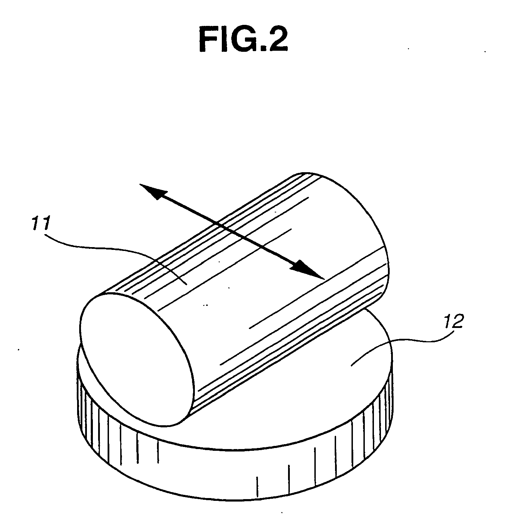

A variety of test pieces and opposite pieces were prepared as follows and subjected to SRV test under the following conditions in Examples 1-15 and Comparative Examples 1-20. The SRV test was conducted using a SRV tester, in which the test piece (11) was allowed to slide on the opposite piece (12) in a reciprocating manner (along a double-headed arrow) as shown in FIG. 2. The coefficient of sliding friction between the test piece (11) and the opposite piece (12) was measured during the test. After the test, the amount of wear on the test piece (11) was observed. The test results are shown in TABLES 1 to 5.

### (Test conditions)

| | |
|---|---|
| Test piece (11) | A cylindrical-shaped piece having a dimension of 18 mm (diameter) × 22 mm (length) |
| Opposite piece (12) | A disc-shaped piece having a dimension of 24 mm |
| | (diameter) × 7 mm (thickness). |
| Test unit: | SRV tester |
| Frequency: | 50 Hz |
| Temperature: | 80°C |
| Load applied: | 400 N |
| Reciprocating pitch: | 3 mm |
| Test time: | 15 minutes |

### Example 1

A cylindrical block having a dimension of 18 mm (diameter) × 22 mm (length) was cut from high-carbon chromium steel SUJ2 according to JIS G4805. A DLC coating film having a hydrogen content of 20 atomic% and a thickness of 0.5 µm was then formed by a PVD arc ion plating process on a cylindrical portion of the cut block, thereby giving a test piece (11).

Next, a disc-shaped piece having a dimension of 24 mm (diameter) × 7 mm (thickness) was cut from carbon steel S45C according to JIS G4051 and finished to a surface roughness Ra of 0.2 µm, thereby giving an opposite piece (12). Herein, the surface roughness Ra is explained as Ra₇₅ according to JIS B0601.

The SRV test was then performed on the test piece (11) and opposite piece (12) under a condition that gasoline with no additives was applied to the test piece (11).

### Example 2

A test piece (11) was prepared in the same way as in Example 1, except that a DLC coating film having a hydrogen content of 0.5 atomic% and a thickness of 0.5 µm was formed on the cut block. Further, the same opposite piece (12) as used in Example 1 was prepared. The SRV test was then performed on the test piece (11) and opposite piece (12) under a condition that gasoline with no additives was applied to the test piece (11).

### Example 3

The same test piece (11) and the same opposite piece (12) as used in Example 2 were prepared. The SRV test was performed on the test piece (11) and opposite piece (12) under a condition that gasoline containing 6% by mass ethyl tert-butyl ether was applied to the test piece (11).

### Comparative Example 1

A test piece (11) was prepared in the same manner as in Example 1, except that a chrome plating film having a thickness of 50 µm was formed in place of the DLC coating film. Further, the same opposite piece (12) as used in Example 1 was prepared. The SRV test was then performed on the test piece (11) and opposite piece (12) under a condition that gasoline with no additives was applied to the test piece (11).

### Comparative Example 2

A test piece (11) was prepared in the same manner as in Example 1, except that a chrome nitride film having a thickness of 20 µm was formed in place of the DLC coating film. Further, the same opposite piece (12) as used in Example 1 was prepared. The SRV test was then performed on the test piece (11) and opposite piece (12) under a condition that gasoline with no additives was applied to the test piece (11).

### Comparative Example 3

The same test piece (11) and the same opposite piece (12) as used in Comparative Example 1 were prepared. Then, the SRV test was performed on the test piece (11) and opposite piece (12) under a condition that gasoline containing 6% by mass ethyl tert-butyl ether was applied to the test piece (11).

### Comparative Example 4

The same test piece (11) and the same opposite piece (12) as used in Comparative Example 2 were prepared. The SRV test was performed on the test piece (11) and opposite piece (12) under a condition that gasoline containing 6% by mass ethyl tert-butyl ether was applied to the test piece (11).

### Comparative Example 5

A test piece (11) was prepared in the same manner as in Example 1, except that a DLC coating film was formed on the cylindrical portion of the cut block by a CVD process with a hydrogen content of 35 atomic% and a thickness of 12 µm. Further, the same opposite piece (12) as used in Example 1 was prepared. The SRV test was then performed on the test piece (11) and opposite piece (12) under a condition that gasoline with no additives was applied to the test piece (11).

**TABLE 1**

| | Test piece | | Lubricity improver content (%) | Test results | |
|---|---|---|---|---|---|
| | Coating film | Hydrogen content (atomic%) | | Friction coefficient | Wear amount |
| Example 1 | DLC | 20 | 0 | 0.054 | 1.5 |
| Example 2 | DLC | 0.5 | 0 | 0.044 | 1.3 |
| Example 3 | DLC | 0.5 | 6 | 0.040 | 1.0 |
| Comparative Example 1 | Cr plating | - | 0 | 0.185 | 5.5 |
| Comparative Example 2 | CrN | - | 0 | 0.120 | 2.2 |
| Comparative Examples 3 | Cr plating | - | 6 | 0.183 | 5.4 |
| Comparative Example 4 | CrN | - | 6 | 0.121 | 2.3 |
| Comparative Example 5 | DLC | 35 | 0 | 0.064 | 1.7 |

| | | | | | |
|---|---|---|---|---|---|
| Lubricity improver: ethyl tert-butyl ether Note: The wear amounts of the test pieces of Examples 1-2 and Comparative Examples 1-5 are indicated with reference to the wear amount of the test piece of Example 3. | | | | | |

### Example 4

A cylindrical block having a dimension of 18 mm (diameter) × 22 mm (length) was cut from high-carbon chromium steel SUJ2 according to JIS G4805. A DLC coating film having a hydrogen content of 20 atomic% and a thickness of 0.5 µm was then formed by a PVD arc ion plating process on a cylindrical portion of the cut block, thereby giving a test piece (11).

A disc-shaped piece having a dimension of 24 mm (diameter) × 7 mm (thickness) was cut from carbon steel S45C according to JIS G4051 and finished to a surface roughness Ra of 0.2 µm, thereby giving an opposite piece (12). The surface roughness Ra is herein explained as Ra₇₅ according to JIS B0601.

Then, the SRV test was performed on the test piece (11) and opposite piece (12) under a condition that light oil with no additives was applied to the test piece (11).

### Example 5

A test piece (11) was prepared in the same way as in Example 4, except that a DLC coating film having a hydrogen content of 0.5 atomic% and a thickness of 0.5 µm was formed on the cut block. Further, the same opposite piece (12) as used in Example 4 was prepared. The SRV test was then performed on the test piece (11) and opposite piece (12) under a condition that light oil with no additives was applied to the test piece (11).

### Example 6

The same test piece (11) and the same opposite piece (12) as used in Example 5 were prepared. The SRV test was performed on the test piece (11) and opposite piece (12) under a condition that light oil containing 1% by mass glycerol monooleate was applied to the test piece (11).

### Comparative Example 6

A test piece (11) was prepared in the same manner as in Example 4, except that a chrome plating film having a thickness of 50 µm was formed in place of the DLC coating film. Further, the same opposite piece (12) as used in Example 4 was prepared. The SRV test was then performed on the test piece (11) and opposite piece (12) under a condition that light oil with no additives was applied to the test piece (11).

### Comparative Example 7

A test piece (11) was prepared in the same manner as in Example 4, except that a chrome nitride film having a thickness of 20 µm was formed in place of the DLC coating film. Further, the same opposite piece (12) as used in Example 4 was prepared. The SRV test was then performed on the test piece (11) and opposite piece (12) under a condition that light oil with no additives was applied to the test piece (11).

### Comparative Example 8

The same test piece (11) and the same opposite piece (12) as used in Comparative Example 6 were prepared. The SRV test was performed on the test piece (11) and opposite piece (12) under a condition that light oil containing 1% by mass glycerol monooleate was applied to the test piece (11).

### Comparative Example 9

The same test piece (11) and the same opposite piece (12) as used in Comparative Example 7 were prepared. The SRV test was performed on the test piece (11) and opposite piece (12) under a condition that light oil containing 1% by mass glycerol monooleate was applied to the test piece (11).

### Comparative Example 10

A test piece (11) was prepared in the same manner as in Example 4, except that a DLC coating was formed on the cylindrical portion of the cut block by a CVD process with a hydrogen content of 35 atomic% and a thickness of 12 µm. Further, the same opposite piece (12) as used in Example 4 was prepared. The SRV test was then performed on the test piece (11) and opposite piece (12) under a condition that light oil with no additives was applied to the test piece (11).

**TABLE 2**

| | Test piece | | Lubricity improver content (%) | Test results | |
|---|---|---|---|---|---|
| | Coating film | Hydrogen content (atomic%) | | Friction coefficient | Wear amount |
| Example 4 | DLC | 20 | 0 | 0.055 | 1.4 |
| Example 5 | DLC | 0.5 | 0 | 0.042 | 1.1 |
| Example 6 | DLC | 0.5 | 1 | 0.040 | 1.0 |
| Comparative Example 6 | Cr plating | - | 0 | 0.170 | 4.5 |
| Comparative Example 7 | CrN | - | 0 | 0.140 | 2.4 |
| Comparative Example 8 | Cr plating | - | 1 | 0.170 | 4.7 |
| Comparative Example 9 | CrN | - | 1 | 0.142 | 2.5 |
| Comparative Example 10 | DLC | 35 | 0 | 0.065 | 1.8 |

| | | | | | |
|---|---|---|---|---|---|
| Lubricity improver: glycerol monooleate Note: The wear amounts of the test pieces of Examples 4-5 and Comparative Examples 6-10 are indicated with reference to the wear amount of the test piece of Example 6. | | | | | |

### Example 7

A cylindrical block having a dimension of 18 mm (diameter) × 22 mm (length) was cut from high-carbon chromium steel SUJ2 according to JIS G4805. A DLC coating film having a hydrogen content of 20 atomic% and a thickness of 0.5 µm was then formed by a PVD arc ion plating process on a cylindrical portion of the cut block, thereby giving a test piece (11).

A disc-shaped piece having a dimension of 24 mm (diameter) × 7 mm (thickness) was cut from carbon steel S45C according to JIS G4051 and finished to a surface roughness Ra of 0.2 µm, thereby giving an opposite piece (12). Herein, the surface roughness Ra is explained as Ra₇₅ according to JIS B0601.

Then, the SRV test was performed on the test piece (11) and opposite piece (12) under a condition that alcohol fuel containing 90% by mass gasoline and 10% by mass ethanol was applied to the test piece (11).

### Example 8

A test piece (11) was prepared in the same way as in Example 7, except that a DLC coating film having a hydrogen content of 0.5 atomic% and a thickness of 0.5 µm was formed on the cut block. Further, the same opposite piece (12) as used in Example 7 was prepared. The SRV test was then performed on the test piece (11) and opposite piece (12) under a condition that alcohol fuel containing 90% by mass gasoline and 10% by mass ethanol was applied to the test piece (11).

### Example 9

The same test piece (11) and the same opposite piece (12) as used in Example 8 were prepared. The SRV test was performed on the test piece (11) and opposite piece (12) under a condition that alcohol fuel containing 15% by mass gasoline and 85% by mass ethanol was applied to the test piece (11).

### Comparative Example 11

A test piece (11) was prepared in the same manner as in Example 7, except that a chrome plating film having a thickness of 50 µm was formed in place of the DLC coating film. Further, the same opposite piece (12) as used in Example 7 was prepared. The SRV test was then performed on the test piece (11) and opposite piece (12) under a condition that alcohol fuel containing 90% by mass gasoline and 10% by mass ethanol was applied to the test piece (11).

### Comparative Example 12

A test piece (11) was prepared in the same manner as in Example 7, except that a chrome nitride film having a thickness of 20 µm was formed in place of the DLC coating film. Further, the same opposite piece (12) as used in Example 7 was prepared. The SRV test was then performed on the test piece (11) and opposite piece (12) under a condition that alcohol fuel containing 90% by mass gasoline and 10% by mass ethanol was applied to the test piece (11).

### Comparative Example 13

The same test piece (11) and the same opposite piece (12) as used in Comparative Example 11 were prepared. The SRV test was performed on the test piece (11) and opposite piece (12) under a condition that alcohol fuel containing 15% by mass gasoline and 85% by mass ethanol was applied to the test piece (11).

### Comparative Example 14

The same test piece (11) and the same opposite piece (12) as used in Comparative Example 12 were prepared. The SRV test was performed on the test piece (11) and opposite piece (12) under a condition that alcohol fuel containing 15% by mass gasoline and 85% by mass ethanol was applied to the test piece (11).

### Comparative Example 15

A test piece (11) was prepared in the same manner as in Example 7, except that a DLC coating film was formed on the cylindrical portion of the cut block by a CVD process with a hydrogen content of 35 atomic% and a thickness of 12 µm. Further, the same opposite piece (12) as used in Example 7 was prepared. The SRV test was then performed on the test piece (11) and opposite piece (12) under a condition that alcohol fuel containing 90% by mass gasoline and 10% by mass ethanol was applied to the test piece (11).

**TABLE 3**

| | Test piece | | Ethanol content in fuel (%) | Test results | |
|---|---|---|---|---|---|
| | Coating film | Hydrogen content (atomic%) | | Friction coefficient | Wear amount |
| Example 7 | DLC | 20 | 10 | 0.070 | 1.7 |
| Example 8 | DLC | 0.5 | 10 | 0.050 | 1.5 |
| Example 9 | DLC | 0.5 | 85 | 0.042 | 1.0 |
| Comparative Example 11 | Cr plating | - | 10 | 0.185 | 8.4 |
| Comparative Example 12 | CrN | - | 10 | 0.110 | 3.2 |
| Comparative Example 13 | Cr plating | - | 85 | 0.224 | 10.2 |
| Comparative Example 14 | CrN | - | 85 | 0.145 | 3.7 |
| Comparative Example 15 | DLC | 35 | 10 | 0.082 | 2.2 |

| | | | | | |
|---|---|---|---|---|---|
| Note: The wear amounts of the test pieces of Examples 7-8 and Comparative Examples 11-15 are indicated with reference to the wear amount of the test piece of Example 9. | | | | | |

### Example 10

A cylindrical block having a dimension of 18 mm (diameter) × 22 mm (length) was cut from high-carbon chromium steel SUJ2 according to JIS G4805. A DLC coating film having a hydrogen content of 20 atomic% and a thickness of 0.5 µm was then formed by a PVD arc ion plating process on a cylindrical portion of the cut block, thereby giving a test piece (11).

A disc-shaped piece having a dimension of 24 mm (diameter) × 7 mm (thickness) was cut from carbon steel S45C according to JIS G4051 and finished to a surface roughness Ra of 0.2 µm, thereby giving an opposite piece (12). The surface roughness Ra is explained as Ra₇₅ according to JIS B0601.

Then, the SRV test was performed on the test piece (11) and opposite piece (12) under a condition that biodiesel fuel containing 95% by mass light oil and 5% by mass a mixture of rape-seed methyl esters (prepared by methyl-esterifying rape-seed oil) was applied to the test piece (11).

### Example 11

A test piece (11) was prepared in the same way as in Example 10, except that a DLC coating film having a hydrogen content of 0.5 atomic% and a thickness of 0.5 µm was formed on the cut block. The same opposite piece (12) as used in Example 10 was prepared. The SRV test was performed on the test piece (11) and opposite piece (12) under a condition that biodiesel fuel containing 95% by mass light oil and 5% by mass a mixture of rape-seed methyl esters (prepared by methyl-esterifying rape-seed oil) was applied to the test piece (11).

### Example 12

The same test piece (11) and the same opposite piece (12) as used in Example 11 were prepared. The SRV test was performed on the test piece (11) and opposite piece (12) under a condition that biodiesel fuel containing 70% by mass light oil and 30% by mass a mixture of rape-seed methyl esters (prepared by methyl-esterifying rape-seed oil) was applied to the test piece (11).

### Comparative Example 16

A test piece (11) was prepared in the same manner as in Example 10, except that a chrome plating film having a thickness of 50 µm was formed in place of the DLC coating film. The same opposite piece (12) as used in Example 10 was prepared. The SRV test was performed on the test piece (11) and opposite piece (12) under a condition that biodiesel fuel containing 95% by mass light oil and 5% by mass a mixture of rape-seed methyl esters (prepared by methyl-esterifying rape-seed oil) was applied to the test piece (11).

### Comparative Example 17

A test piece (11) was prepared in the same manner as in Example 10, except that a chrome nitride film having a thickness of 20 µm was formed in place of the DLC coating film. Further, the same opposite piece (12) as used in Example 10 was prepared. The SRV test was then performed on the test piece (11) and opposite piece (12) under a condition that biodiesel fuel containing 95% by mass light oil and 5% by mass a mixture of rape-seed methyl esters (prepared by methyl-esterifying rape-seed oil) was applied to the test piece (11).

### Comparative Example 18

The same test piece (11) and the same opposite piece (12) as used in Comparative Example 16 were prepared. The SRV test was performed on the test piece (11) and opposite piece (12) under a condition that biodiesel fuel containing 70% by mass light oil and 30% by mass a mixture of rape-seed methyl esters (prepared by methyl-esterifying rape-seed oil) was applied to the test piece (11).

### Comparative Example 19

The same test piece (11) and the same opposite piece (12) as used in Comparative Example 17 were prepared. The SRV test was performed on the test piece (11) and opposite piece (12) under a condition that biodiesel fuel containing 70% by mass light oil and 30% by mass a mixture of rape-seed methyl esters (prepared by methyl-esterifying rape-seed oil) was applied to the test piece (11).

### Comparative Example 20

A test piece (11) was prepared in the same manner as in Example 10, except that a DLC coating film was formed on the cylindrical portion of the cut block by a CVD process with a hydrogen content of 35 atomic% and a thickness of 12 µm. The same opposite piece (12) as used in Example 10 was prepared. The SRV test was performed on the test piece (11) and opposite piece (12) under a condition that biodiesel fuel containing 95% by mass light oil and 5% by mass a mixture of rape-seed methyl esters (prepared by methyl-esterifying rape-seed oil) was applied to the test piece (11).

**TABLE 4**

| | Test piece | | FAME content in fuel (%) | Test results | |
|---|---|---|---|---|---|
| | Coating film | Hydrogen content (atomic%) | | Friction coefficient | Wear amount |
| Example 10 | DLC | 20 | 5 | 0.055 | 1.4 |
| Example 11 | DLC | 0.5 | 5 | 0.045 | 1.2 |
| Example 12 | DLC | 0.5 | 30 | 0.040 | 1.0 |
| Comparative Example 16 | Cr plating | - | 5 | 0.155 | 4.4 |
| Comparative Example 17 | CrN | - | 5 | 0.105 | 2.8 |
| Comparative Example 18 | Cr plating | - | 30 | 0.156 | 4.5 |
| Comparative Example 19 | CrN | - | 30 | 0.102 | 2.7 |
| Comparative Example 20 | DLC | 35 | 5 | 0.068 | 1.9 |

| | | | | | |
|---|---|---|---|---|---|
| FAME: rape-seed methyl esters Note: The wear amounts of the test pieces of Examples 10-11 and Comparative Examples 16-20 are indicated with reference to the wear amount of the test piece of Example 12. | | | | | |

### Example 13

A cylindrical block having a dimension of 18 mm (diameter) × 22 mm (length) was cut from high-carbon chromium steel SUJ2 according to JIS G4805. A DLC coating film having a hydrogen content of 20 atomic% and a thickness of 0.5 µm was then formed by a PVD arc ion plating process on a cylindrical portion of the cut block, thereby giving a test piece (11).

A disc-shaped piece having a dimension of 24 mm (diameter) × 7 mm (thickness) was cut from carbon steel S45C according to JIS G4051 and finished to a surface roughness Ra of 0.2 µm, thereby giving an opposite piece (12). The surface roughness Ra is herein explained as Ra₇₅ according to JIS B0601.

Then, the SRV test was performed on the test piece (11) and opposite piece (12) under a condition that GTL fuel with no light oil and no additives (i.e. a GTL product obtained from natural gas by Fischer-Tropsch process) was applied to the test piece (11).

### Example 14

A test piece (11) was prepared in the same way as in Example 13, except that a DLC coating film having a hydrogen content of 0.5 atomic% and a thickness of 0.5 µm was formed on the cut block. Further, the same opposite piece (12) as used in Example 13 was prepared. The SRV test was then performed on the test piece (11) and opposite piece (12) under a condition that GTL fuel with no light oil and no additives (i.e. a GTL product obtained from natural gas by Fischer-Tropsch process) was applied to the test piece (11).

### Example 15

The same test piece (11) and the same opposite piece (12) as used in Example 14 were prepared. The SRV test was performed on the test piece (11) and opposite piece (12) under a condition that GTL fuel prepared by blending 1% by mass glycerol monooleate with a GTL product (obtained from natural gas by Fischer-Tropsch process) was applied to the test piece (11).

### Comparative Example 21

A test piece (11) was prepared in the same manner as in Example 13, except that a chrome plating film having a thickness of 50 µm was formed in place of the DLC coating film. Further, the same opposite piece (12) as used in Example 13 was prepared. The SRV test was then performed on the test piece (11) and opposite piece (12) under a condition that GTL fuel with no light oil and no additives (i.e. a GTL product obtained from natural gas by Fischer-Tropsch process) was applied to the test piece (11).

### Comparative Example 22

A test piece (11) was prepared in the same manner as in Example 13, except that a chrome nitride film having a thickness of 20 µm was formed in place of the DLC coating film. Further, the same opposite piece (12) as used in Example 13 was prepared. The SRV test was then performed on the test piece (11) and opposite piece (12) under a condition that GTL fuel with no light oil and no additives (i.e. a GTL product obtained from natural gas by Fischer-Tropsch process) was applied to the test piece (11).

### Comparative Example 23

The same test piece (11) and the same opposite piece (12) as used in Comparative Example 21 were prepared. The SRV test was performed on the test piece (11) and opposite piece (12) under a condition that GLT fuel prepared by blending 1% by mass glycerol monooleate with a GTL product (obtained from natural gas by Fischer-Tropsch process) was applied to the test piece (11).

### Comparative Example 24

The same test piece (11) and the same opposite piece (12) as used in Comparative Example 22 were prepared. The SRV test was performed on the test piece (11) and opposite piece (12) under a condition that GLT fuel prepared by blending 1% by mass glycerol monooleate with a GTL product (obtained from natural gas by Fischer-Tropsch process) was applied to the test piece (11).

### Comparative Example 25

A test piece (11) was prepared in the same manner as in Example 13, except that a DLC coating film was formed on the cylindrical portion of the cut block by a CVD process with a hydrogen content of 35 atomic% and a thickness of 12 µm. Further, the same opposite piece (12) as used in Example 13 was prepared. The SRV test was then performed on the test piece (11) and opposite piece (12) under a condition that GTL fuel with no light oil and no additives (i.e. a GTL product obtained from natural gas by Fischer-Tropsch process) was applied to the test piece (11).

**TABLE 5**

| | Test piece | | Lubricity improver content (%) | Test results | |
|---|---|---|---|---|---|
| | Coating film | Hydrogen content (atomic%) | | Friction coefficient | Wear amount |
| Example 13 | DLC | 20 | 0 | 0.062 | 1.7 |
| Example 14 | DLC | 0.5 | 0 | 0.050 | 1.3 |
| Example 15 | DLC | 0.5 | 1 | 0.045 | 1.0 |
| Comparative Example 21 | Cr plating | - | 0 | 0.175 | 4.8 |
| Comparative Example 22 | CrN | - | 0 | 0.142 | 2.4 |
| Comparative Example 23 | Cr plating | - | 1 | 0.168 | 4.7 |
| Comparative Example 24 | CrN | - | 1 | 0.140 | 2.5 |
| Comparative Example 25 | DLC | 35 | 0 | 0.071 | 2.2 |

| | | | | | |
|---|---|---|---|---|---|
| Lubricity improver: glycerol monooleate Note: The wear amounts of the test pieces of Examples 13-14 and Comparative Examples 21-25 are indicated with reference to the wear amount of the test piece of Example 15. | | | | | |

### (2) Evaluation of Wear/Corrosion Resistance

### Examples 16-17 and Comparative Examples 26-28

The same combinations of test pieces (11) and opposite pieces (12) as in Examples 7 and 9 and Comparative Examples 13, 14 and 15 were prepared in Examples 16 and 17 and Comparative Examples 26, 27 and 28 respectively, and then, subjected to the SRV test in an ethanol bath. The test conditions were the same as above, except that the test time was 1 hour. After the test, the wear amount of the test piece (11) and the occurrence of corrosion on the test piece (11) were observed. The test results are shown in FIG. 6.

**TABLE 6**

| | Test piece | | Test results | |
|---|---|---|---|---|
| | Coating film | Hydrogen content (atomic%) | Wear amount | Occurrence of corrosion |
| Example 16 | DLC | 20 | 1.8 | Not occurred |
| Example 17 | DLC | 0.5 | 1.0 | Not occurred |
| Comparative Example 26 | Cr plating | - | 18.8 | Occurred |
| Comparative Example 27 | CrN | - | 7.7 | Slightly occurred |
| Comparative Example 28 | DLC | 35 | 2.5 | Not occurred |

| | | | | |
|---|---|---|---|---|
| Note: The wear amounts of the test pieces of Example 16 and Comparative Examples 26-28 are indicated with reference to the wear amount of the test piece of Example 17. | | | | |

It is apparent from TABLES 1 to 5 that the sliding parts of Examples 1-15 had much lower friction coefficients and smaller wear amounts than those of the sliding parts of Comparative Examples 1-4, 6-9, 11-14, 16-19 and 21-24. Also, it is apparent from TABLE 6 that the sliding parts of Examples 16-17 were more resistant to corrosion by alcohol than the sliding parts of Comparative Examples 26-27. The sliding parts of Comparative Examples 5, 10, 15, 20, 25 and 28 had lower friction coefficients and smaller wear amounts than those of the other Comparative Examples, but did not always meet the expectations of friction reduction and wear/corrosion resistance improvement to a satisfactory extent because of the hydrogen content of the DLC coating films exceeding 30 atomic%.

As described above, at lease one of the opposed sliding portions of the sliding parts has a hard carbon coating low in hydrogen content according to the present invention. The sliding parts are thus able to attain a low coefficient of sliding friction and high wear resistance in the presence of gasoline, light oil, alcohol fuel, biodiesel fuel or GTL fuel. The sliding parts are also able to attain high corrosion resistance in gasoline, light oil, alcohol fuel, biodiesel fuel or GTL fuel. It is therefore possible to increase, when the sliding mechanism is applied to a fuel system component, such as a fuel injection valve, the durability/reliability of the fuel system component.

The entire contents of Japanese Patent Application No. 2003-207060 (filed on August 11, 2003), No. 2003-207061 (filed on August 11, 2003), No. 2003-207058 (filed on August 11, 2003), No. 2003-207063 (filed on August 11, 2003) and No. 2003-207057 (filed on August 11, 2003) are herein incorporated by reference.

Although the present invention has been described with reference to specific embodiments of the invention, the invention is not limited to the above-described embodiments. Various modification and variation of the embodiments described above will occur to those skilled in the art in light of the above teaching. The scope of the invention is defined with reference to the following claims.

## Claims

1. A fuel lubricated sliding mechanism (1), comprising a pair of sliding parts (3; 4, 5) having respective sliding portions slidable relative to each other in the presence of fuel, at least one of the sliding portions of the sliding parts (3; 4, 5) having a hard carbon coating formed by physical vapor deposition with a hydrogen content of 5 atomic% or less, and the fuel being selected from the group consisting of gasoline, light oil, alcohol fuel, biodiesel fuel and GTL fuel.

2. A fuel lubricated sliding mechanism (1) according to claim 1, wherein the hard carbon coating is formed by arc ion plating.

3. A fuel lubricated sliding mechanism (1) according to claim 1 or 2, wherein the gasoline contains therein an ether lubricity improver.

4. A fuel lubricated sliding mechanism (1) according to claim 3, wherein the ether lubricity improver is at least one of methyl tert-butyl ether and ethyl tert-butyl ether.

5. A fuel lubricated sliding mechanism (1) according to claim 1 or 2, wherein the light oil contains therein at least one of a fatty-ester lubricity improver and an aliphatic-amine lubricity improver.

6. A fuel lubricated sliding mechanism (1) according to claim 1 or 2, wherein the alcohol fuel is a blend of gasoline and at least one alcohol selected from the group consisting of methanol, ethanol, n-propanol, isopropanol, n-butanol and isobutanol.

7. A fuel lubricated sliding mechanism (1) according to claim 1 or 2, wherein the biodiesel fuel is a blend of light oil and fatty acid methyl esters.

8. A fuel lubricated sliding mechanism (1) according to claim 1 or 2, wherein the GTL fuel contains at least one of a fatty-ester lubricity improver and an aliphatic-amine lubricity improver.

## Patentansprüche

1. Ein Brennstoff-geschmierter Gleitmechanismus (1), umfassend ein Paar von Gleitkomponenten (3; 4, 5), die jeweils relativ zueinander in Anwesenheit eines Brennstoffes gleitende Bereiche aufweisen, wobei mindestens einer der gleitenden Bereiche der Gleitkomponenten (3; 4, 5) eine harte Kohlenstoffbeschichtung aufweist, die durch Abscheidung aus der Dampfphase mit einem Wasserstoffgehalt von 5 Atom-% oder weniger gebildet worden ist, und der Brennstoff ausgewählt ist aus der Gruppe bestehend aus Benzin, Leichtöl, Alkoholbrennstoff, Biodiesel und GTL-Brennstoff.

2. Ein Brennstoff-geschmierter Gleitmechanismus (1) nach Anspruch 1, wobei die harte Kohlenstoffbeschichtung durch Bogenionenplattieren gebildet ist.

3. Ein Brennstoff-geschmierter Gleitmechanismus (1) nach Anspruch 1 oder 2, wobei das Benzin als Gleitverbesserer einen Ether enthält.

4. Ein Brennstoff-geschmierter Gleitmechanismus (1) nach Anspruch 3, wobei der das Gleiten verbessernde Ether Methyltertiärbutylether und/oder Ethyltertiärbutylether ist.

5. Ein Brennstoff-geschmierter Gleitmechanismus (1) nach Anspruch 1 oder 2, wobei das Leichtöl mindestens einen Fettestergleitverbesserer und/oder einen aliphatischen Amin-Gleitverbesserer enthält.

6. Ein Brennstoff-geschmierter Gleitmechanismus (1) nach Anspruch 1 oder 2, wobei der Alkoholbrennstoff ein Gemisch aus Benzin und mindestens einem Alkohol ist, der ausgewählt ist aus der Gruppe bestehend aus Methanol, Ethanol, n-Propanol, Isopropanol, n-Butanol und Isobutanol.

7. Ein Brennstoff-geschmierter Gleitmechanismus (1) nach Anspruch 1 oder 2, wobei der Biodieselbrennstoff ein Gemisch aus Leichtöl und Fettsäuremethylestern ist.

8. Ein Brennstoff-geschmierter Gleitmechanismus (1) nach Anspruch 1 oder 2, wobei der GTL-Brennstoff mindestens einen Fettestergleitverbesserer und(oder einen aliphatischen Amin-Gleitverbesserer enthält.

## Revendications

1. Mécanisme coulissant lubrifié par le carburant (1), comprenant une paire de pièces coulissantes (3 ; 4, 5) ayant des parties coulissantes respectives pouvant coulisser l'une par rapport à l'autre en présence de carburant, au moins une des parties coulissantes des pièces coulissantes (3 ; 4, 5) ayant un revêtement de carbone dur formé par un dépôt physique en phase vapeur avec une teneur en hydrogène inférieure ou égale à 30 % atomique, le carburant étant choisi dans le groupe constitué par de l'essence, une huile légère, un carburant à base d'alcool, un carburant biodiesel et un carburant GTL.

2. Mécanisme coulissant lubrifié par le carburant (1) selon la revendication 1, dans lequel le revêtement de carbone dur est formé par un placage ionique à l'arc.

3. Mécanisme coulissant lubrifié par le carburant (1) selon la revendication 1 ou 2, dans lequel l'essence contient un agent améliorant la lubricité de type éther.

4. Mécanisme coulissant lubrifié par le carburant (1) selon la revendication 3, dans lequel l'agent améliorant la lubricité de type éther est au moins un composant parmi l'éther de méthyle et de tert-butyle et l'éther d'éthyle et de tert-butyle.

5. Mécanisme coulissant lubrifié par le carburant (1) selon la revendication 1 ou 2, dans lequel l'huile légère contient au moins un composant parmi un agent améliorant la lubricité de type ester gras et un agent améliorant la lubricité de type amine aliphatique.

6. Mécanisme coulissant lubrifié par le carburant (1) selon la revendication 1 ou 2, dans lequel le carburant à base d'alcool est un mélange d'essence et d'au moins un alcool choisi dans le groupe constitué par le méthanol, l'éthanol, le n-propanol, l'isopropanol, le n-butanol et l'isobutanol.

7. Mécanisme coulissant lubrifié par le carburant (1) selon la revendication 1 ou 2, dans lequel le carburant biodiesel est un mélange d'huile légère et d'esters de méthyle d'acide gras.

8. Mécanisme coulissant lubrifié par le carburant (1) selon la revendication 1 ou 2, dans lequel le carburant GTL contient au moins un composant parmi un agent améliorant la lubricité de type ester gras et un agent améliorant la lubricité de type amine aliphatique.
